# EUROPEAN PATENT SPECIFICATION

(11) **EP 4 524 364 B1**
(45) Date of publication and mention of the grant of the patent: **11.02.2026**
(21) Application number: 23772395.2
(22) Date of filing: 04.08.2023
(51) Int. Cl.: E21D 9/10, E21D 9/00, E21D 9/12, E21D 9/14, E21D 1/06

(54) **VERTICAL TUNNELING SYSTEM**
VERTIKALES TUNNELSYSTEM
SYSTÈME DE CREUSEMENT DE TUNNEL VERTICAL

(30) Priority: 27.07.2023 CN 202310929416
(43) Date of publication of application: 19.03.2025
(73) Proprietor: Jiangsu Ruicheng Machinery Co., Ltd., Xushe Town, Yixing City Wuxi, Jiangsu 214200 (CN); Beijing Research Institute of Uranium Geology, Chaoyang District Beijing 100029 (CN)
(72) Inventor: WANG, Ju, Beijing 100029 (CN); TAN, Haiqiang, Jiangsu 214200 (CN); CHEN, Liang, Beijing 100029 (CN); TAN, Xiangcheng, Jiangsu 214200 (CN); GONG, Qiuming, Beijing 100029 (CN); MA, Hongsu, Beijing 100029 (CN); ZHAO, Xingguang, Beijing 100029 (CN); YIN, Lijun, Beijing 100029 (CN)
(74) Representative: Schneiders & Behrendt Bochum
(86) International application number: PCT/CN2023/111201
(87) International publication number: WO 2025/020224

(56) References cited:
- CN-A- 106 812 546
- CN-A- 113 153 330
- CN-A- 114 892 662
- JP-A- H0 642 283

## Description

### TECHNICAL FIELD

The present disclosure relates to the technical field of pit construction equipment in tunnels, in particular to a vertical tunneling system.

### BACKGROUND

In the disposal of high-level radioactive waste, the final disposal method of burying high-level radioactive waste in a stable geological body with a depth range of 500 m to 1000 m is currently widely considered to be technically feasible in the world.

The disposal repository of high-level radioactive waste in the geological body usually includes a horizontal channel and a vertically downward disposal pit in the channel. The vertically downward disposal pit is formed by a vertical tunneling operation, that is a vertical tunneling head tunnels vertically downward in a rock mass.

In an existing vertical tunneling device, such as a high-level radioactive waste disposal pit tunneling system disclosed in the Chinese patent application number of CN 113153330 A, the pit body is dug through a main operation device for vertical downward tunneling, a cutter head on the tunneling head is driven to rotate through a hydraulic motor, and the rock mass is cut through the cutter head. When the vertical cutter head cuts the rock mass, an intense vibration is generated, resulting in an intense vibration of a main body of the vertical tunneling device. Because the existing vertical tunneling device is equipped with a large number of high-accuracy sensors in order to realize automatic operation, when the main body of the vertical tunneling device vibrates, the accuracy of the data detected by the high-accuracy sensors is seriously affected, so that the operating reliability of the entire device is reduced, the device cannot work stably and automatically, and the construction period is seriously affected.

In addition, the intense vibration of the main body of the vertical tunneling device can result in the difficulty in controlling the tunneling accuracy, so the vertical tunneling device needs to be high in anti-vibration performance. The existing vertical tunneling device is low in anti-vibration performance, so that the use requirements cannot be met.

### SUMMARY

The present disclosure aims to provide a vertical tunneling system to solve the problems in the prior art and increase the tunneling accuracy of the vertical tunneling system.

In order to achieve the above aim, the present disclosure provides the following solution.

The present disclosure provides a vertical tunneling system, including:
a main operation device, the main operation device can move, be positioned at a certain position in a tunnel, and tunnel vertically downward; the main operation device includes a frame, a propulsion system, a tunneling head, a pipe joint transfer table and a pipe joint transfer vehicle; the propulsion system includes propulsion cylinders, propulsion pressure plates, and at least four guide rods, the guide rods are fixedly connected with the frame, all the guide rods are arranged in parallel with each other, the number of the propulsion cylinders is two, the propulsion cylinders are fixedly connected with the frame, and the propulsion pressure plates are each slidably sleeved on one of the guide rods; the propulsion cylinders press and lift the tunneling head, and press and lift pipe joints coaxially stacked one by one above the tunneling head through the propulsion pressure plates; a tunneling hole is formed in the frame, and the tunneling head and the pipe joints coaxially stacked one by one above the tunneling head can penetrate through the tunneling hole; the pipe joint transfer table is fixedly arranged on the frame, and the pipe joint transfer vehicle is in sliding fit with the pipe joint transfer table and can be positioned directly above the tunneling hole; the pipe joints can be detachably connected with the tunneling head, the pipe joints can be detachably connected with each other, and the bottom end of the propulsion pressure plates can be detachably connected with the tunneling head and the pipe joints;
a pipe joint conveying unit, the pipe joint conveying unit includes a transport vehicle, a movable hoisting frame and a transition frame, wherein a plurality of pipe joints stored on the transport vehicle; first guide rails distributed along the length direction of the transport vehicle are arranged on the transport vehicle, the bottom ends of the movable hoisting frame are in sliding fit with the first guide rails; second guide rails parallel to the first guide rails are arranged on the top ends of the movable hoisting frame, and the transition frame is in sliding fit with the second guide rails; horizontal third guide rails perpendicular to the second guide rails are fixedly arranged on the transition frame; a sliding seat is in sliding fit with the third guide rails, a hoisting cylinder is fixedly arranged on the sliding seat, and a free end of a piston rod of the hoisting cylinder is used for hoisting the pipe joints; the part of the movable hoisting frame and the pipe joints hoisted by the hoisting cylinder can be positioned above the pipe joint transfer vehicle.

Preferably, the vertical tunneling system further includes a vibration prevention unit. The vibration prevention unit includes at least two vibration prevention mechanisms arranged in the tunneling head. Each of the vibration prevention mechanisms includes a vibration prevention cylinder and a bracing disc, the bracing disc is connected with a hydraulic rod of the vibration prevention cylinder by a spherical joint, and the vibration prevention cylinder is used for driving the bracing disc to move along the radial direction of the tunneling head. Rollers in rolling fit with an inner wall of a vertical driving shaft are arranged on the surface of the bracing disc.

Preferably, the main operation device further includes a positioning and external bracing system. The positioning and external bracing system includes at least four upright posts arranged along the circumferential direction of the tunneling hole. A top bracing cylinder is fixedly arranged at the top end of each of the upright posts, and a movable end of each of the top bracing cylinders extends to a top wall of the tunnel. The positioning and external bracing system further includes: side bracing cylinders, a movable end of each of the side bracing cylinders extends to a side wall of the tunnel; and floor bracing cylinders, a movable end of each of the floor bracing cylinders extends to the floor of the tunnel, at least one side bracing cylinder is arranged at each side of the frame, and the floor bracing cylinders are fixedly connected with the bottom ends of the frame. The movable end of each of the top bracing cylinders is connected with an upper bracing disc by a spherical joint, the movable end of each of the side bracing cylinders is connected with a side bracing disc by a spherical joint, and the movable end of each of the floor bracing cylinders is connected with a lower bracing disc by a spherical joint.

Preferably, the vertical tunneling system further includes a pipeline retracting device, a power supply, a hydraulic station and a control device. A pipeline for driving and controlling the tunneling head is wound on the pipeline retracting device, and an inner end of the pipeline is connected with the control device, the power supply and the hydraulic station through a rotary joint. An outer end of the pipeline is connected to the tunneling head from an outer wall of the tunneling head and an oblique channel of the tunneling head, and a wiring slot for accommodating the pipeline is formed in an outer wall of the pipe joints.

Preferably, the vertical tunneling system further includes a slag discharging system. The slag discharging system includes a slag suction device, a slag discharging channel formed in the frame, a first slag discharging pipe arranged in the tunneling head and a second slag discharging pipe arranged in the pipe joints. One end of the slag discharging channel is connected with the slag suction device, and the other end of the slag discharging channel is a slag suction port in a sealed and separable connection with the first slag discharging pipe and the second slag discharging pipe. The slag suction port is lifted and lowered along with the propulsion pressure plates.

Preferably, the length of each of the first guide rails is equal to that of the transport vehicle.

Preferably, the main operation device further includes a guide system. The guide system includes two laser ranging devices fixed on the frame and two laser targets fixed on the top end of the tunneling head, and the laser targets correspond to the laser ranging devices one to one.

Preferably, the vertical tunneling system further includes an air supply system. The air supply system includes an air supply fan and an air supply pipe, and the air supply fan supplies air to a cutter head in the tunneling head through the air supply pipe.

Compared with the prior art, the present disclosure has the following technical effects.

According to the vertical tunneling system of the present disclosure, by arranging the semi-automatic pipe joint conveying unit, the use of high-accuracy sensors is greatly reduced, and then the problem that the operating reliability of the device is reduced due to low accuracy of the data detected by the high-accuracy sensors caused by vibration of the entire device is avoided, so that the operating reliability is improved. In addition, the pipe joint conveying unit in the vertical tunneling system of the present disclosure is suitable for narrow operating areas, and the pipe joint conveying unit can directly transfer the pipe joints to the pipe joint transfer vehicle, so that the pipe joint conveying unit is convenient to use.

According to the vertical tunneling system of the present disclosure, by arranging the vibration prevention unit, the anti-vibration performance of the tunneling head is greatly improved, the tunneling head can stably tunnel downward, and then the situation that the entire device vibrates along with the intense vibration of the tunneling head is avoided.

According to the vertical tunneling system of the present disclosure, by arranging the positioning and external bracing system, the position of the main operation device in the tunnel can be effectively fixed, and no displacement occurs during tunneling vibration.

According to the vertical tunneling system of the present disclosure, by arranging the guide system, the position of the tunneling head can be arranged more accurately, so that the tunneling accuracy is increased.

According to the propulsion system in the vertical tunneling system of the present disclosure, by arranging the at least four guide rods, the guide accuracy is increased, so that the tunneling accuracy is increased.

### BRIEF DESCRIPTION OF THE DRAWINGS

To describe the technical solution in the embodiments of the present disclosure or in the prior art more clearly, the following briefly introduces the attached figures required for describing the embodiments. Apparently, the attached figures in the following description show merely some embodiments of the present disclosure, and those skilled in the art may still derive other attached figures from these attached figures without creative efforts.
FIG. 1 is a structural schematic diagram of a vertical tunneling system of the present disclosure.
FIG. 2 is a structural schematic diagram of a vertical tunneling system of the present disclosure.
FIG. 3 is a structural schematic diagram of a pipe joint conveying unit in a vertical tunneling system of the present disclosure.
FIG. 4 is a structural schematic diagram of a pipe joint conveying unit in a vertical tunneling system of the present disclosure.
FIG. 5 is a structural schematic diagram of a pipe joint conveying unit in a vertical tunneling system of the present disclosure.
FIG. 6 is a structural schematic diagram of a tunneling head in a vertical tunneling system of the present disclosure.
FIG. 7 is a structural schematic diagram of a vibration prevention mechanism in a vertical tunneling system of the present disclosure.

Reference signs: 1, frame; 2, propulsion cylinder; 3, propulsion pressure plate; 4, upright post; 5, top bracing cylinder; 6, upper bracing disc; 7, side bracing disc; 8, side bracing cylinder; 9, hydraulic station; 10, pipeline retracting device; 11, laser ranging device; 12, air supply pipe; 13, slag discharging channel; 14, movable hoisting frame; 15, transport vehicle; 16, slag suction device; 17, pipe joint transfer vehicle; 18, pipe joint; 19, pipe joint transfer table; 20, guide rod; 21, first guide rail; 22, second guide rail; 23, transition frame; 24, sliding seat; 25, hoisting cylinder; 26, fixing plate; 27, tunneling head; 28, bracing disc; and 29, vibration prevention cylinder.

### DETAILED DESCRIPTION OF THE EMBODIMENTS

The following clearly and completely describes the technical solution in the embodiments of the present disclosure with reference to the embodiments of the present disclosure. Apparently, the described embodiments are merely a part rather than all of the embodiments of the present disclosure. Based on the embodiment of the present disclosure, all other embodiments obtained by the ordinary technical staff in the art under the premise of without contributing creative labor fall within the scope of protection of the present disclosure.

The present disclosure provides a vertical tunneling system to solve the problems in the prior art and increase the tunneling accuracy of the vertical tunneling system.

To make the foregoing objective, features and advantages of the present disclosure clearer and more comprehensible, the present disclosure is further described in detail below with reference to the attached figures and specific embodiments.

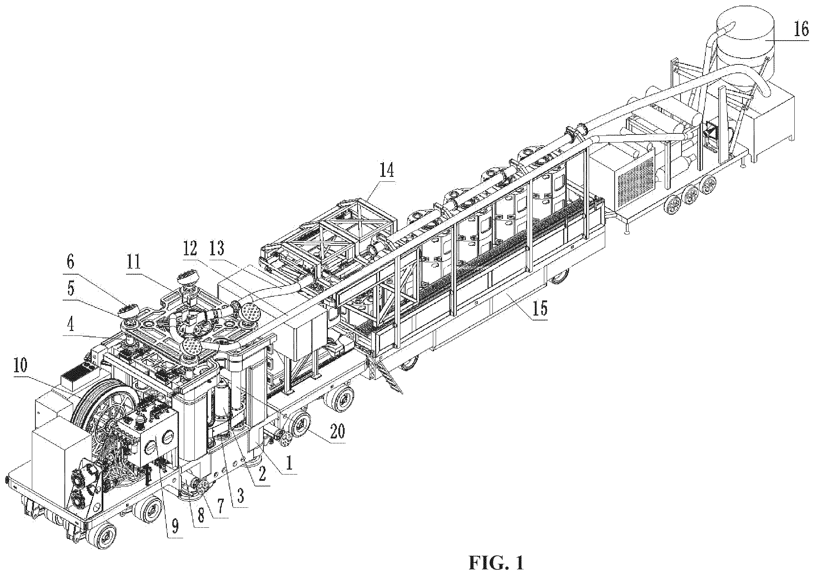

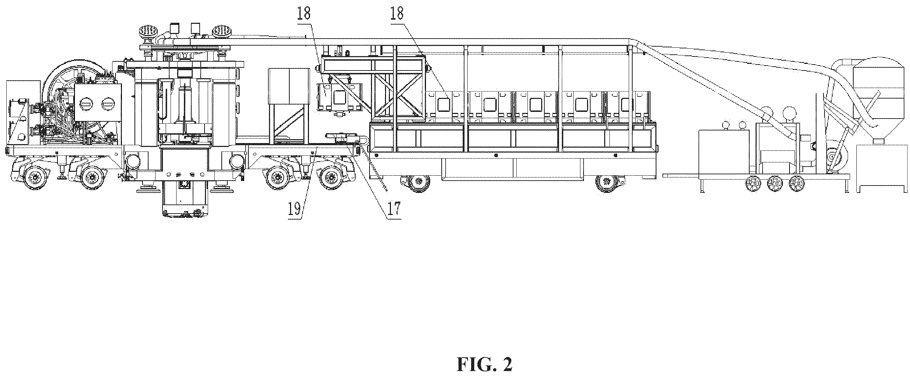

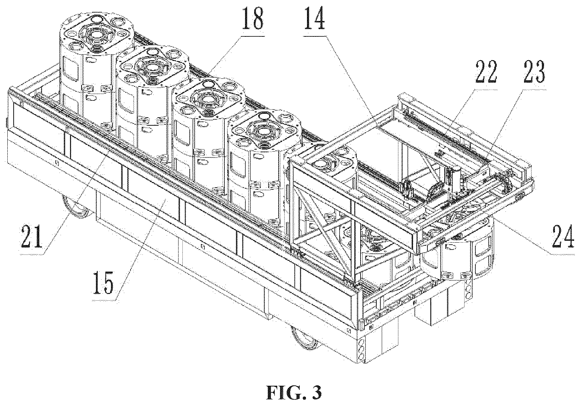

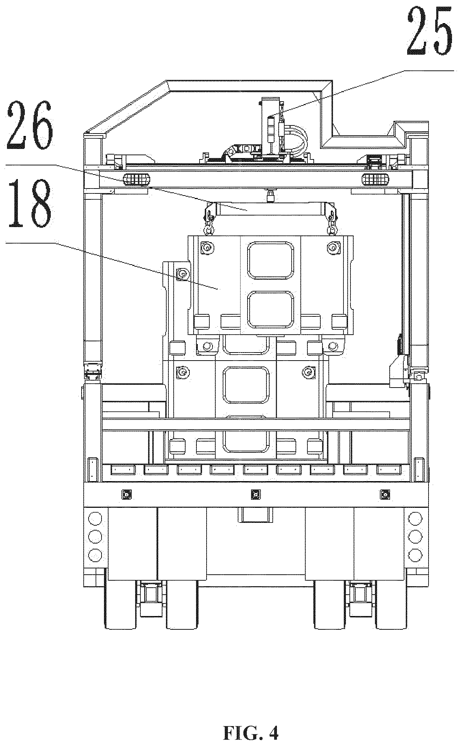

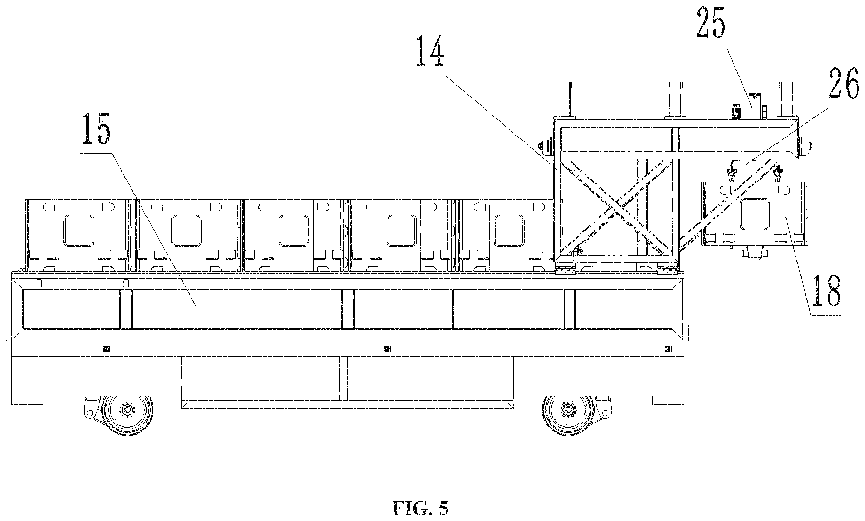

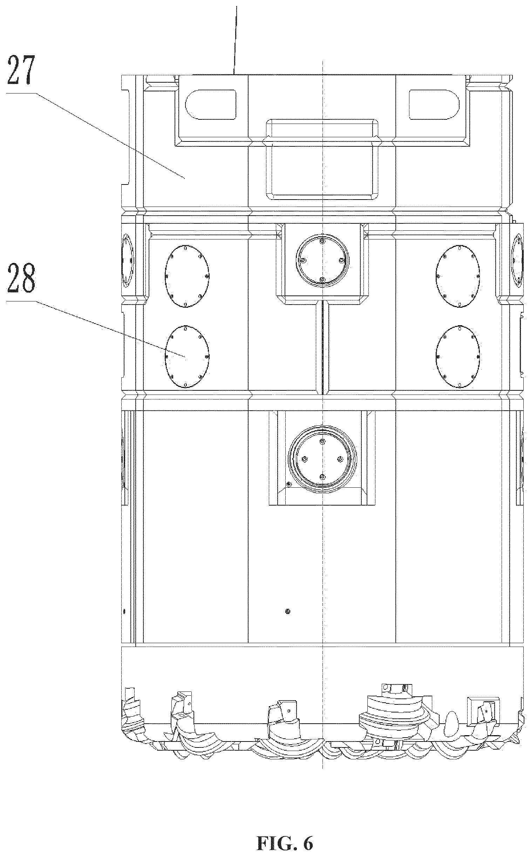

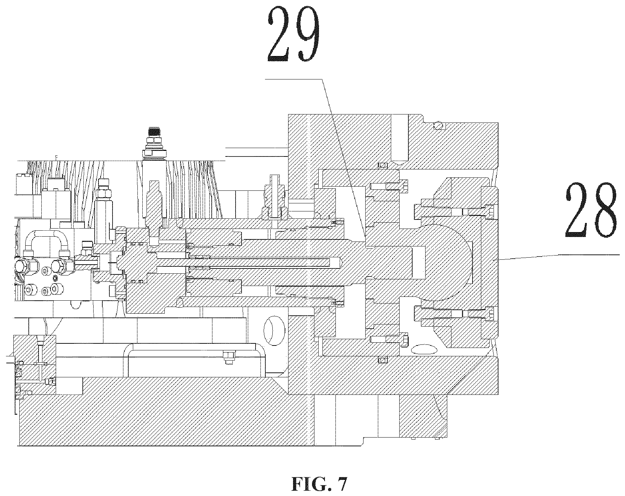

As shown in FIG. 1 to FIG. 7, the embodiment provides a vertical tunneling system. The vertical tunneling system includes a main operation device, a vibration prevention unit, a pipe joint conveying unit, a slag discharging system, an air supply system, a pipeline retracting device 10, a power supply, a hydraulic station 9, and a control device.

The main operation device can move and be positioned at a certain position in a tunnel, and tunnels vertically downward. The main operation device includes a frame 1, a propulsion system, a tunneling head 27, a pipe joint transfer table 19, and a pipe joint transfer vehicle 17. The propulsion system includes propulsion cylinders 2, propulsion pressure plates 3 and at least four guide rods 20. The guide rods 20 are fixedly connected with the frame 1. All the guide rods 20 are arranged in parallel with each other. The number of the propulsion cylinders 2 is two. The propulsion cylinders 2 are fixedly connected with the frame 1. The propulsion pressure plates 3 are each slidably sleeved on one of the guide rods 20. The propulsion cylinders 2 press and lift the tunneling head 27, and press and lift the pipe joints 18 that are coaxially stacked one by one above the tunneling head 27 through the propulsion pressure plates 3. A tunneling hole is formed in the frame 1, and the tunneling head 27 and the pipe joints 18 that are coaxially stacked one by one above the tunneling head 27 can penetrate through the tunneling hole. The pipe joint transfer table 19 is fixedly arranged on the frame 1, and the pipe joint transfer vehicle 17 is in sliding fit with the pipe joint transfer table 19 and can be positioned directly above the tunneling hole. The pipe joints 18 can be detachably connected with the tunneling head 27, and the pipe joints 18 can be detachably connected with each other. The bottom of the propulsion pressure plates 3 can be detachably connected with the tunneling head 27 and the pipe joints 18.

In the embodiment, the main operation device further includes a positioning and external bracing system. The positioning and external bracing system includes at least four upright posts 4 arranged along the circumferential direction of the tunneling hole. A top bracing cylinder 5 is arranged at the top of each of the upright posts; and a movable end of each of the top bracing cylinders extends to a top wall of the tunnel. The positioning and external bracing system further includes: side bracing cylinders 8, a movable end of each of the side bracing cylinders extends to a side wall of the tunnel, and floor bracing cylinders, a movable end of each of the floor bracing cylinder extends to the floor of the tunnel, at least one side bracing cylinder 8 is arranged at each side of the frame 1, and the floor bracing cylinders are fixedly connected with the bottom end of the frame 1. The movable end of each of the top bracing cylinders 5 is connected with an upper bracing disc 6 by a spherical joint, the movable end of each of the side bracing cylinders 8 is connected with a side bracing disc 7 by a spherical joint, and the movable end of each of the floor bracing cylinders is connected with a lower bracing disc 28 by a spherical joint. After the position of the main operation device is adjusted in place, the top bracing cylinders 5, the side bracing cylinders 8 and the floor bracing cylinders drive the upper bracing discs 6 to brace a top surface of the tunnel, the side bracing discs 7 to brace the side wall of the tunnel, and the lower bracing discs 28 to brace a bottom surface of the tunnel, respectively, so that the position of the main operation device in the tunnel can be effectively fixed, and the main operation device cannot be displaced during tunneling vibration.

The guide system includes two laser ranging devices 11 fixed on the frame 1 and two laser targets fixed on the top of the tunneling head 27, and the laser targets correspond to the laser ranging devices 11 one to one. The guide system in the embodiment is used for measuring mechanical excavation equipment for disposal pits in real time by using the laser targets and the laser ranging technology. The principle is as follows: by analyzing and calculating the position information of the two laser targets, the rotation angle and the inclination angle of the tunneling head 27 are obtained, and then the specific position and attitude of the tunneling head 27 are known, so that the tunneling head 27 is convenient to control accurately.

The pipe joint conveying unit includes a transport vehicle 15, a movable hoisting frame 14, a transition frame 23 and a plurality of pipe joints 18 stored on the transport vehicle 15. First guide rails 21 distributed along the length direction of the transport vehicle 15 are arranged on the transport vehicle 15. The bottom ends of the movable hoisting frame 14 are in sliding fit with the first guide rails 21. Second guide rails 22 parallel to the first guide rails 21 are arranged on the top ends of the movable hoisting frame 14, and the transition frame 23 is in sliding fit with the second guide rails 22. Horizontal third guide rails perpendicular to the second guide rails 22 are fixedly arranged on the transition frame 23. A sliding seat 24 is in sliding fit with the third guide rails, a hoisting cylinder 25 is fixedly arranged on the sliding seat 24, and a free end of a piston rod of the hoisting cylinder 25 is used for hoisting the pipe joints 18. Specifically, the free end of the piston rod of the hoisting cylinder 25 is fixedly provided with a fixing plate 26. The pipe joints 18 can be suspended from and connected with the fixing plate through a rope, for example. The part of the movable hoisting frame 14 and the pipe joints 18 hoisted by the hoisting cylinder 25 can be positioned above the pipe joint transfer vehicle 17.

In the embodiment, the length of each of the first guide rails 21 is equal to that of the transport vehicle 15.

According to the vertical tunneling system in the embodiment, the specific process of installing the pipe joints 18 above the tunneling head 27 through the pipe joint conveying unit is as follows.

When the tunneling head 27 is fed down to the point where the pipe joints 18 need to be installed, the propulsion pressure plates 3 are detached from the tunneling head 27 (when no pipe joint 18 is installed above the tunneling head 27) or the uppermost pipe joint 18 above the tunneling head 27 (when the pipe joints 18 are installed above the tunneling head 27), and the propulsion cylinders 2 lift the propulsion pressure plates 3 to reserve a space for installing the pipe joints 18. One pipe joint 18 is hoisted by the hoisting cylinder 25, and then the movable hoisting frame 14 is driven by a driving device to move along the first guide rails 21. And then, the transition frame 23 slides along the second guide rails 22, and the sliding seat 24 slides along the third guide rails, so that the hoisted pipe joint 18 is positioned directly above the pipe joint transfer vehicle 17, and then the hoisted pipe joint 18 is driven to lower by the hoisting cylinder 25. After the bottom end of the hoisted pipe joint 18 is contact with a top surface of the pipe joint transfer vehicle 17, the pipe joint 18 is detached from the fixing plate 26, so that the hoisting cylinder 25 no longer hoists the pipe joint 18, and then the fixing plate 26 is raised by the hoisting cylinder 25. The pipe joint transfer vehicle 17 slides directly above the tunneling head 27. The pipe joint 18 on the pipe joint transfer vehicle 17 is detachably connected with the propulsion pressure plates 3, and then the pipe joint transfer vehicle 17 moves away. Finally, the installed pipe joint 18 is detachably connected with the tunneling head 27 (when no pipe joint 18 is installed above the tunneling head 27) or the uppermost pipe joint 18 above the tunneling head 27 (when the pipe joints 18 are installed above the tunneling head 27).

According to the vertical tunneling system of the embodiment, the specific process of removing the uppermost pipe joint 18 above the tunneling head 27 is as follows.

The main operation device is of a structure for fixing the second pipe joint 18 from top to bottom, wherein a stop ring (not shown in the figure) is arranged at a mouth of the tunneling hole An upper end face of the stop ring is provided with a stop wedge (not shown in the figure) which swings up and down and extends into the tunneling hole. When the pipe joint 18 is raised, the stop wedge is pushed to swing up, and then the stop wedge is swung by the gravity of the stop wedge and inserted into the pipe joint 18 or a pin hole in the tunneling head 27, so that the second pipe joint 18 and the pipe joints 18 and the tunneling head 27 below are prevented from falling. The stop ring and the stop wedge are related to the existing mature technologies in the field, and are not described in detail. Specific structure and principle are involved in the Chinese patent application number CN 113153330 A. After the tunneling head 27 or the second pipe joint 18 from top to bottom is fixed, the uppermost pipe joint 18 is detached from the propulsion pressure plates 3, and then the uppermost pipe joint 18 is removed by the pipe joint transfer vehicle 17, and the pipe joint 18 is stored on the transport vehicle 15 by the hoisting cylinder 25. After the uppermost pipe joint 18 is removed, the propulsion pressure plates 3 are driven by the propulsion cylinders 2 to be lowered and connected to the second pipe joint 18 for hoisting, and the pipe joints 18 are removed in sequence. The removal of pipe joints 18 is a reverse operation of the feeding of the pipe joints 18.

According to the vertical tunneling system of the embodiment, the process of installing and removing the pipe joints 18 is carried out by manual assistance, instead of full automation. By arranging the semi-automatic pipe joint conveying unit, the use of a large number of high-accuracy sensors in the pipe joint conveying unit is greatly reduced, and then the problem that the operating reliability of the device is reduced due to low accuracy of the data detected by the high-accuracy sensors caused by vibration of the entire device is avoided, so that the operating reliability is improved. In addition, the pipe joint conveying unit in the vertical tunneling system of the present disclosure is suitable for narrow operating areas, and the pipe joint conveying unit can directly transfer the pipe joints 18 to the pipe joint transfer vehicle 17, so that the pipe joint conveying unit is convenient to use.

The vibration prevention unit includes at least two vibration prevention mechanisms arranged in the tunneling head 27, and the vibration prevention mechanisms are distributed along the circumferential direction of the tunneling head 27. Each of the vibration prevention mechanisms includes a vibration prevention cylinder 29 and a bracing disc 28, the bracing disc 28 is connected with a hydraulic rod of the vibration prevention cylinder 29 by a spherical joint, and the vibration prevention cylinder 29 is used for driving the bracing disc 28 to move along the radial direction of the tunneling head 27. Rollers in rolling fit with an inner wall of a vertical driving shaft (namely a tunneling pit formed by down digging of the tunneling head 27) are arranged on a surface of the bracing disc 28. When the vibration prevention unit is operating, the bracing disc 28 in each vibration prevention mechanism extends out and is in close contact with the inner wall of the vertical tunneling shaft, so that the vibration along the radial direction of the vertical tunneling shaft will not occur during the downward movement of the tunneling head 27, the anti-vibration performance of the tunneling head 27 is greatly improved, the tunneling head 27 can stably tunnel downward, and then the situation that the entire device vibrates along with the intense vibration of the tunneling head 27 is avoided.

A pipeline for driving and controlling the tunneling head 27 is wound on the pipeline retracting device 10, and an inner end of the pipeline is connected with the control device, the power supply and the hydraulic station 9 through a rotary joint. An outer end of the pipeline is connected to the tunneling head 27 from an outer wall of the tunneling head 27 and an oblique channel of the tunneling head 27, and a wiring slot for accommodating the pipeline is formed in an outer wall of the pipe joints 18.

The slag discharging system includes a slag suction device 16, a slag discharging channel 13 formed in the frame 1, a first slag discharging pipe arranged in the tunneling head 27 and a second slag discharging pipe arranged in the pipe joints 18, one end of the slag discharging channel 13 is connected with the slag suction device 16, the other end of the slag discharging channel 13 is a slag suction port in a sealed and separable connection with the first slag discharging pipe and the second slag discharging pipe, and the slag suction port is lifted and lowered along with the propulsion pressure plates 3.

The air supply system includes an air supply fan and an air supply pipe 12, and the air supply fan supplies air to a cutter head in the tunneling head 27 through the air supply pipe 12. Practice has proved that by arranging the air supply system, the intake air near a tunnel face of the vertical tunneling shaft is increased during the process of vacuum slag discharge through the slag discharging system, so that the intake air carrying the slags on the tunnel face is discharged through the first slag discharging pipe, the second slag discharging pipe and the slag discharging channel 13, so that the slag discharge effect is improved.

Specific examples are used for illustration of the principles and implementation methods of the present disclosure. The description of the above-mentioned embodiments is used to help illustrate the method and its main principles of the present disclosure. In addition, those skilled in the art can make various modifications in terms of specific embodiments and scope of application in accordance with the teachings of the present disclosure. In summary, the contents of this specification should not be understood as the limitation of the present disclosure , and the scope of the invention is limited only by the appended claims.

## Claims

1. A vertical tunneling system, comprising:
a main operation device, the main operation device is capable of moving, being positioned at a position in a tunnel, and vertically tunneling downward; the main operation device comprises a frame (1), a propulsion system, a tunneling head (27), a pipe joint transfer table (19) and a pipe joint transfer vehicle (17); the propulsion system comprises propulsion cylinders (2), propulsion pressure plates (3), and at least four guide rods (20), the guide rods (20) are fixedly connected with the frame (1), all the guide rods (20) are arranged in parallel with each other, the number of the propulsion cylinders (2) is two, the propulsion cylinders (2) are fixedly connected with the frame (1), and the propulsion pressure plates (3) are each slidably sleeved on one of the guide rods (20); the propulsion cylinders (2) press and lift the tunneling head (27), and press and lift pipe joints (18) coaxially stacked one by one above the tunneling head (27) through the propulsion pressure plates (3); a tunneling hole is formed in the frame (1), and the tunneling head (27) and the pipe joints (18) coaxially stacked one by one above the tunneling head (27) can penetrate through the tunneling hole; the pipe joint transfer table (19) is fixedly arranged on the frame (1), and the pipe joint transfer vehicle (17) is in sliding fit with the pipe joint transfer table (19) and capable of being positioned directly above the tunneling hole; the pipe joint (18) is capable of being detachably connected with the tunneling head (27), the pipe joints (18) are capable of being detachably connected with each other, and a bottom end of the propulsion pressure plates (3) is capable of being detachably connected with the tunneling head (27) and the pipe joints (18);
a pipe joint conveying unit, the pipe joint conveying unit comprises a transport vehicle (15), a movable hoisting frame (14) and a transition frame (23), wherein a plurality of pipe joints (18) stored on the transport vehicle (15); first guide rails (21) distributed along a length direction of the transport vehicle (15) are arranged on the transport vehicle (15); the bottom ends of the movable hoisting frame (14) are in sliding fit with the first guide rails (21); second guide rails (22) parallel to the first guide rails (21) are arranged on the top ends of the movable hoisting frame (14), and the transition frame (23) is in sliding fit with the second guide rails (22); horizontal third guide rails perpendicular to the second guide rails (22) are fixed on the transition frame (23); a sliding seat (24) is in sliding fit with the third guide rails, a hoisting cylinder (25) is fixed on the sliding seat (24), and a free end of a piston rod of the hoisting cylinder (25) is used for hoisting the pipe joints (18); a part of the movable hoisting frame (14) and the pipe joints (18) hoisted by the hoisting cylinder (25) are capable of being positioned above the pipe joint transfer vehicle (17).

2. The vertical tunneling system according to claim 1, **characterized in that** it further comprises a vibration prevention unit, wherein the vibration prevention unit comprises at least two vibration prevention mechanisms arranged in the tunneling head (27); each of the vibration prevention mechanisms comprises a vibration prevention cylinder (29) and a bracing disc (28), the bracing disc (28) is connected with a hydraulic rod of the vibration prevention cylinder (29) by a spherical joint, and the vibration prevention cylinder (29) is used for driving the bracing disc (28) to move along a radial direction of the tunneling head (27); and rollers in rolling fit with an inner wall of a vertical driving shaft are arranged on a surface of the bracing disc (28).

3. The vertical tunneling system according to claim 1, **characterized in that** the main operation device further comprises a positioning and external bracing system; the positioning and external bracing system comprises at least four upright posts (4) arranged along a circumferential direction of the tunneling hole, a top bracing cylinder (5) is fixedly arranged at a top end of each of the upright posts (4), a movable end of each of the top bracing cylinders (5) extends to a top wall of the tunnel, the positioning and external bracing system further comprises: side bracing cylinders (8), a movable end of each of the side bracing cylinders (8) extends to a side wall of the tunnel; and floor bracing cylinders, a movable end of each of the floor bracing cylinders extends to floor of the tunnel, at least one side bracing cylinder (8) is arranged at each side of the frame (1) , and the floor bracing cylinders are fixedly connected with the bottom ends of the frame (1); a movable end of each of the top bracing cylinders (5) is connected with an upper bracing disc (6) by a spherical joint, a movable end of each of the side bracing cylinders (8) is connected with a side bracing disc (7) by a spherical joint, and a movable end of each of the floor bracing cylinders is connected with a lower bracing disc by a spherical joint.

4. The vertical tunneling system according to claim 1, **characterized in that** it further comprises a pipeline retracting device (10), a power supply, a hydraulic station (9) and a control device, wherein a pipeline for driving and controlling the tunneling head (27) is wound on the pipeline retracting device (10), and an inner end of the pipeline is connected with the control device, the power supply and the hydraulic station (9) through a rotary joint; and an outer end of the pipeline is connected to the tunneling head (27) from an outer wall of the tunneling head (27) and an oblique channel of the tunneling head (27), and a wiring slot for accommodating the pipeline is formed in an outer wall of the pipe joints (18).

5. The vertical tunneling system according to claim 1, **characterized in that** it further comprises a slag discharging system, wherein the slag discharging system comprises a slag suction device (16), a slag discharging channel (13) formed in the frame (1), a first slag discharging pipe arranged in the tunneling head (27) and a second slag discharging pipe arranged in the pipe joints (18), one end of the slag discharging channel (13) is connected with the slag suction device (16), an other end of the slag discharging channel (13) is a slag suction port in a sealed and separable connection with the first slag discharging pipe and the second slag discharging pipe, and the slag suction port is lifted and lowered along with the propulsion pressure plates (3).

6. The vertical tunneling system according to claim 1, wherein the length of each of the first guide rails (21) is equal to that of the transport vehicle (15).

7. The vertical tunneling system according to claim 1, **characterized in that** the main operation device further comprises a guide system, the guide system comprises two laser ranging devices (11) fixed on the frame (1) and two laser targets fixed on the top end of the tunneling head (27), and the laser targets correspond to the laser ranging device (11)s one to one.

8. The vertical tunneling system according to claim 1, **characterized in that** it further comprises an air supply system, wherein the air supply system comprises an air supply fan and an air supply pipe (12), and the air supply fan supplies air to a cutter head in the tunneling head (27) through the air supply pipe (12).

## Patentansprüche

1. Vertikales Tunnelsystem, umfassend:
eine Hauptbetätigungsvorrichtung, wobei die Hauptbetätigungsvorrichtung beweglich sein kann, an einer Position in einem Tunnel positioniert werden kann und vertikal nach unten tunneln kann; die Hauptbetätigungsvorrichtung einen Rahmen (1), ein Antriebssystem, einen Tunnelkopf (27), einen Rohrverbindungs-Transfertisch (19) und ein Rohrverbindungs-Transferfahrzeug (17) umfasst; das Antriebssystem Antriebszylinder (2), Antriebsdruckplatten (3) und mindestens vier Führungsstangen (20) umfasst, die Führungsstangen (20) mit dem Rahmen (1) fest verbunden sind, alle Führungsstangen (20) parallel zueinander angeordnet sind, die Anzahl der Antriebszylinder (2) zwei beträgt, die Antriebszylinder (2) mit dem Rahmen (1) fest verbunden sind und die Antriebsdruckplatten (3) jeweils verschiebbar auf einer der Führungsstangen (20) aufgesteckt sind; die Antriebszylinder (2) den Tunnelkopf (27) drücken und heben und die Rohrverbindungen (18) drücken und heben, die koaxial übereinander über dem Tunnelkopf (27) angeordnet sind, durch die Antriebsdruckplatten (3); in dem Rahmen (1) ein Tunnelloch ausgebildet ist und der Tunnelkopf (27) und die Rohrverbindungen (18), die koaxial übereinander über dem Tunnelkopf (27) gestapelt sind, durch das Tunnelloch hindurchdringen können; der Rohrverbindungs-Transfertisch (19) an dem Rahmen (1) fest angeordnet ist und das Rohrverbindungs-Transferfahrzeug (17) gleitend mit dem Rohrverbindungs-Transfertisch (19) verbunden ist und direkt über dem Tunnelloch positioniert werden kann; die Rohrverbindung (18) mit dem Tunnelkopf (27) lösbar verbunden werden kann, die Rohrverbindungen (18) lösbar miteinander verbunden werden können und ein unteres Ende der Antriebsdruckplatten (3) mit dem Tunnelkopf (27) und den Rohrverbindungen (18) lösbar verbunden werden kann;
eine Rohrverbindungs-Fördereinheit, wobei die Rohrverbindungs-Fördereinheit ein Transportfahrzeug (15), einen bewegbaren Heberahmen (14) und einen Übergangsrahmen (23) umfasst, wobei eine Vielzahl von Rohrverbindungen (18) auf dem Transportfahrzeug (15) gelagert sind; erste Führungsschienen (21), die entlang einer Längsrichtung des Transportfahrzeugs (15) verteilt sind, auf dem Transportfahrzeug (15) angeordnet sind; die unteren Enden des bewegbaren Heberahmens (14) in Gleitpassung mit den ersten Führungsschienen (21) stehen; zweite Führungsschienen (22), die parallel zu den ersten Führungsschienen (21) verlaufen, an den oberen Enden des bewegbaren Heberahmens (14) angeordnet sind und der Übergangsrahmen (23) in Gleitpassung mit den zweiten Führungsschienen (22) steht; horizontale dritte Führungsschienen, die senkrecht zu den zweiten Führungsschienen (22) stehen, an dem Übergangsrahmen (23) fixiert sind; ein Gleitsitz (24) in Gleitpassung mit den dritten Führungsschienen steht, ein Hubzylinder (25) an dem Gleitsitz (24) fixiert ist und ein freies Ende einer Kolbenstange des Hubzylinders (25) zum Heben der Rohrverbindungen (18) verwendet wird; ein Teil des bewegbaren Hubrahmens (14) und die Rohrverbindungen (18), die von dem Hubzylinder (25) angehoben werden, über dem Rohrverbindungs-Transportfahrzeug (17) positioniert werden können.

2. Vertikales Tunnelsystem nach Anspruch 1, **dadurch gekennzeichnet, dass** es ferner eine Vibrationsverhinderungseinheit umfasst, wobei die Vibrationsverhinderungseinheit mindestens zwei Vibrationsverhinderungsmechanismen umfasst, die in dem Tunnelkopf (27) angeordnet sind; jeder der Vibrationsverhinderungsmechanismen einen Vibrationsverhinderungszylinder (29) und eine Verstrebungsscheibe (28) umfasst, wobei die Verstrebungsscheibe (28) über ein Kugelgelenk mit einer Hydraulikstange des Vibrationsverhinderungszylinders (29) verbunden ist und der Vibrationsverhinderungszylinder (29) dazu verwendet wird, die Verstrebungsscheibe (28) anzutreiben, damit sie sich entlang einer radialen Richtung des Tunnelkopfes (27) bewegt; und Rollen, die in Rollpassung mit einer Innenwand einer vertikalen Antriebswelle stehen, auf einer Oberfläche der Verstrebungsscheibe (28) angeordnet sind.

3. Vertikales Tunnelsystem nach Anspruch 1, **dadurch gekennzeichnet, dass** die Hauptbetätigungsvorrichtung ferner ein Positionierungs- und Außenverstrebungssystem umfasst; das Positionierungs- und Außenverstrebungssystem mindestens vier aufrecht stehende Pfosten (4) umfasst, die entlang einer Umfangsrichtung des Tunnellochs angeordnet sind, ein oberer Verstrebungszylinder (5) an einem oberen Ende jedes der aufrecht stehenden Pfosten (4) fest angeordnet ist, ein bewegbares Ende jedes der oberen Versteifungszylinder (5) sich bis zu einer oberen Wand des Tunnels erstreckt und das Positionierungs- und Außenverstrebungssystem ferner Forlgendes umfasst: Seitenverstrebungszylinder (8), wobei sich ein bewegbares Ende jedes der Seitenverstrebungszylinder (8) bis zu einer Seitenwand des Tunnels erstreckt; und Bodenverstrebungszylinder, wobei sich ein bewegbares Ende jedes Bodenverstrebungszylinders bis zum Boden des Tunnels erstreckt, wobei mindestens ein Seitenverstrebungszylinder (8) an jeder Seite des Rahmens (1) angeordnet ist und die Bodenverstrebungszylinder mit den unteren Enden des Rahmens (1) fest verbunden sind; ein bewegbares Ende jedes der oberen Verstrebungszylinder (5) über ein Kugelgelenk mit einer oberen Verstrebungsscheibe (6) verbunden ist, ein bewegbares Ende jedes der Seitenverstrebungszylinder (8) über ein Kugelgelenk mit einer Seitenverstrebungsscheibe (7) verbunden ist und ein bewegbares Ende jedes der Bodenverstrebungszylinder über ein Kugelgelenk mit einer unteren Verstrebungsscheibe verbunden ist.

4. Vertikales Tunnelsystem nach Anspruch 1, **dadurch gekennzeichnet, dass** es ferner eine Rohrleitungs-Aufwickelvorrichtung (10), eine Energieversorgung, eine Hydraulikstation (9) und eine Steuervorrichtung umfasst, wobei eine Rohrleitung zum Antreiben und Steuern des Tunnelkopfes (27) auf die Rohrleitungs-Aufwickelvorrichtung (10) aufgewickelt ist und ein inneres Ende der Rohrleitung über ein Drehgelenk mit der Steuervorrichtung, der Energieversorgung und der Hydraulikstation (9) verbunden ist; und ein äußeres Ende der Rohrleitung mit dem Tunnelkopf (27) von einer äußeren Wand des Tunnelkopfes (27) und einem schrägen Kanal des Tunnelkopfes (27) verbunden ist, und ein Verdrahtungsschlitz zum Aufnehmen der Rohrleitung in einer äußeren Wand der Rohrverbindungen (18) ausgebildet ist.

5. Vertikales Tunnelsystem nach Anspruch 1, **dadurch gekennzeichnet, dass** es ferner ein Schlackeauslasssystem umfasst, wobei das Schlackeauslasssystem eine Schlackesaugvorrichtung (16) umfasst, einen Schlackeauslasskanal (13) umfasst, der in dem Rahmen (1) ausgebildet ist, ein erstes Schlackeauslassrohr umfasst, das in dem Tunnelkopf (27) angeordnet ist, und ein zweites Schlackeauslassrohr umfasst, das in den Rohrverbindungen (18) angeordnet ist, ein Ende des Schlackeauslasskanals (13) mit der Schlackesaugvorrichtung (16) verbunden ist, ein anderes Ende des Schlackeauslasskanals (13) eine Schlackesaugöffnung in einer abgedichteten und trennbaren Verbindung mit dem ersten Schlackeauslassrohr und dem zweiten Schlackeauslassrohr ist und die Schlackesaugöffnung zusammen mit den Antriebsdruckplatten (3) angehoben und abgesenkt wird.

6. Vertikales Tunnelsystem nach Anspruch 1, wobei die Länge jeder der ersten Führungsschienen (21) gleich der Länge des Transportfahrzeugs (15) ist.

7. Vertikales Tunnelsystem nach Anspruch 1, **dadurch gekennzeichnet, dass** die Hauptbetätigungsvorrichtung ferner ein Führungssystem umfasst, wobei das Führungssystem zwei Laserentfernungsmessvorrichtungen (11) umfasst, die an dem Rahmen (1) fixiert sind, und zwei Laserziele umfasst, die an dem oberen Ende des Tunnelkopfes (27) fixiert sind, und die Laserziele den Laserentfernungsmessvorrichtungen (11) eins zu eins entsprechen.

8. Vertikales Tunnelsystem nach Anspruch 1, **dadurch gekennzeichnet, dass** es ferner ein Luftzufuhrsystem umfasst, wobei das Luftzufuhrsystem ein Luftzufuhrgebläse und ein Luftzufuhrrohr (12) umfasst und das Luftzufuhrgebläse einem Schneidkopf in dem Tunnelkopf (27) durch das Luftzufuhrrohr (12) Luft zuführt.

## Revendications

1. Système de creusement de tunnel vertical, le système comprenant :
un dispositif d'actionnement principal, le dispositif d'actionnement principal pouvant se déplacer, être positionné au niveau d'une certaine position dans un tunnel, et creuser un tunnel verticalement vers le bas ; le dispositif d'actionnement principal comprend un cadre (1), un système de propulsion, une tête (27) de creusement de tunnel, une table (19) de transfert de joints de tuyaux et un véhicule (17) de transfert de joints de tuyaux ; le système de propulsion comprend des vérins de propulsion (2), des plaques de pression de propulsion (3) et au moins quatre tiges de guidage (20), les tiges de guidage (20) sont reliées fixes au cadre (1), toutes les tiges de guidage (20) sont agencées parallèles les unes aux autres, le nombre de vérins de propulsion (2) est égal à deux, les vérins de propulsion (2) sont reliés fixes au cadre (1), et chaque plaque de pression de propulsion (3) est emmanchée coulissante sur l'une des tiges de guidage (20) ; les vérins de propulsion (2) servent à presser et à élever la tête (27) de creusement de tunnel, et à presser et à élever des joints de tuyaux (18), empilés de manière coaxial un par un au-dessus de la tête (27) de creusement de tunnel, à travers les plaques de pression de propulsion (3) ; un trou de creusement de tunnel est formé dans le cadre (1), et la tête (27) de creusement de tunnel, et les joints de tuyaux (18) empilés de manière coaxial un par un au-dessus de la tête (27) de creusement de tunnel, peuvent pénétrer à travers le trou de creusement de tunnel ; la table (19) de transfert de joints de tuyaux est agencée fixe sur le cadre (1), et le véhicule (17) de transfert de joints de tuyaux est en ajustement coulissant avec la table (19) de transfert de joints de tuyaux et peut être positionné directement au-dessus du trou de creusement de tunnel ; le joint de tuyaux (18) peut être relié détachable à la tête (27) de creusement de tunnel, les joints de tuyaux (18) peuvent être reliés détachables les uns aux autres, et une extrémité inférieure des plaques de pression de propulsion (3) peut être reliée détachable à la tête (27) de creusement de tunnel et aux joints de tuyaux (18) ;
une unité de transport de joints de tuyaux, l'unité de transport de joints de tuyaux comprenant un véhicule de transport (15), un cadre de levage mobile (14) et un cadre de transition (23), une pluralité de joints de tuyaux (18) étant stockée sur le véhicule de transport (15) ; des premiers rails de guidage (21), distribués le long d'un sens longitudinal du véhicule de transport (15), sont agencés sur le véhicule de transport (15) ; les extrémités inférieures du cadre de levage mobile (14) sont en ajustement coulissant avec les premiers rails de guidage (21) ; des deuxièmes rails de guidage (22), parallèles aux premiers rails de guidage (21), sont agencés sur les extrémités supérieures du cadre de levage mobile (14), et le cadre de transition (23) est en ajustement coulissant avec les deuxièmes rails de guidage (22) ; des troisièmes rails de guidage horizontaux, perpendiculaires aux deuxièmes rails de guidage (22), sont fixés sur le cadre de transition (23) ; un siège coulissant (24) est en ajustement coulissant avec les troisièmes rails de guidage, un vérin de levage (25) est fixé sur le siège coulissant (24), et une extrémité libre d'une tige de piston du vérin de levage (25) est utilisée pour élever les joints de tuyaux (18) ; une partie du cadre de levage mobile (14), et les joints de tuyaux (18) élevés par le vérin de levage (25), peuvent être positionnés au-dessus du véhicule (17) de transfert de joints de tuyaux.

2. Le système de creusement de tunnel vertical selon la revendication 1, **caractérisé en ce qu'**il comprend en outre une unité anti-vibrations, l'unité anti-vibrations comprenant au moins deux mécanismes anti-vibrations agencés dans la tête (27) de creusement de tunnel ; chaque mécanisme anti-vibrations comprend un vérin anti-vibrations (29) et un disque de renforcement (28), le disque de renforcement (28) est relié à une tige hydraulique du vérin anti-vibrations (29) au moyen d'un joint sphérique, et le vérin anti-vibrations (29) est utilisé pour amener le disque de renforcement (28) à se déplacer le long d'une direction radiale de la tête (27) de creusement de tunnel ; et des rouleaux, en ajustement de roulement avec une paroi interne d'un arbre menant vertical, sont agencés sur une surface du disque de renforcement (28).

3. Le système de creusement de tunnel vertical selon la revendication 1, **caractérisé en ce que** le dispositif d'actionnement principal comprend en outre un système de positionnement et de renforcement externe ; le système de positionnement et de renforcement externe comprend au moins quatre montants (4) agencés le long d'une direction circonférentielle du trou de creusement de tunnel, un vérin de renforcement supérieur (5) est agencé fixe au niveau d'une extrémité supérieure de chaque montant (4), et une extrémité mobile de chaque vérin de renforcement supérieur (5) s'étend vers une paroi supérieure du tunnel ; le système de positionnement et de renforcement externe comprend en outre : des vérins de renforcement latéral (8), une extrémité mobile de chaque vérin de renforcement latéral (8) s'étendant vers une paroi latérale du tunnel ; et des vérins de renforcement de plancher, une extrémité mobile de chaque vérin de renforcement de plancher s'étend vers le plancher du tunnel, au moins un vérin de renforcement latéral (8) est agencé au niveau de chaque côté du cadre (1), et les vérins de renforcement de plancher sont reliés fixes aux extrémités inférieures du cadre (1) ; une extrémité mobile de chaque vérin de renforcement supérieur (5) est reliée à un disque de renforcement supérieur (6) au moyen d'un joint sphérique, une extrémité mobile de chaque vérin de renforcement latéral (8) est reliée à un disque de renforcement latéral (7) au moyen d'un joint sphérique, et une extrémité mobile de chaque vérin de renforcement de plancher est reliée à un disque de renforcement inférieur au moyen d'un joint sphérique.

4. Le système de creusement de tunnel vertical selon la revendication 1, **caractérisé en ce qu'**il comprend en outre un dispositif enrouleur de conduite (10), une alimentation, une station hydraulique (9) et un dispositif de commande, dans lequel une conduite, servant à entraîner et à commander la tête (27) de creusement de tunnel, est enroulée sur le dispositif enrouleur de conduite (10), et une extrémité interne de la conduite est reliée au dispositif de commande, à l'alimentation et à la station hydraulique (9) par l'intermédiaire d'un joint rotatif ; et une extrémité externe de la conduite est reliée à la tête (27) de creusement de tunnel à partir d'une paroi externe de la tête (27) de creusement de tunnel et d'un canal oblique de la tête (27) de creusement de tunnel, et une fente de câblage, permettant de loger la conduite, est formée dans une paroi externe des joints de tuyaux (18).

5. Le système de creusement de tunnel vertical selon la revendication 1, **caractérisé en ce qu'**il comprend en outre un système d'évacuation de scories, dans lequel le système d'évacuation de scories comporte un dispositif (16) d'aspiration de scories, un canal (13) d'évacuation de scories formé dans le cadre (1), un premier tuyau d'évacuation de scories agencé dans la tête (27) de creusement de tunnel et un second tuyau d'évacuation de scories agencé dans les joints de tuyaux (18), une extrémité du canal (13) d'évacuation de scories est reliée au dispositif (16) d'aspiration de scories, une autre extrémité du canal (13) d'évacuation de scories est un orifice d'aspiration de scories en liaison étanche et séparable avec le premier tuyau d'évacuation de scories et le second tuyau d'évacuation de scories, et l'orifice d'aspiration de scories est élevé et descendu conjointement avec les plaques de pression de propulsion (3).

6. Le système de creusement de tunnel vertical selon la revendication 1, dans lequel la longueur de chaque premier rail de guidage (21) est égale à celle du véhicule de transport (15).

7. Le système de creusement de tunnel vertical selon la revendication 1, **caractérisé en ce que** le dispositif d'actionnement principal comprend en outre un système de guidage, le système de guidage comprend deux dispositifs de télémétrie à laser (11) fixés sur le cadre (1) et deux cibles laser fixées sur l'extrémité supérieure de la tête (27) de creusement de tunnel, et les cibles laser correspondent de manière biunivoque aux dispositifs de télémétrie à laser (11).

8. Le système de creusement de tunnel vertical selon la revendication 1, **caractérisé en ce qu'**il comprend en outre un système d'alimentation en air, dans lequel le système d'alimentation en air comporte un ventilateur d'alimentation en air et un tuyau (12) d'alimentation en air, et le ventilateur d'alimentation en air alimente en air une tête de forage dans la tête (27) de creusement de tunnel à travers le tuyau (12) d'alimentation en air.
